# EUROPEAN PATENT APPLICATION

(11) **EP 4 286 349 A1**
(43) Date of publication of application: **06.12.2023**
(21) Application number: 22290037.5
(22) Date of filing: 01.06.2022
(51) Int. Cl.: C04B 28/02, C04B 28/04, C04B 28/06, C04B 28/08

(54) **METHOD OF BUILDING A CONCRETE ELEMENT FOR MARINE OR RIVER APPLICATIONS**

(71) Applicant: Holcim Technology Ltd, 6300 Zug (CH)
(72) Inventor: Morin, Vincent, F-38070 Saint Quentin Fallavier (FR); Dubois-Brugger, Isabelle, F-38070 Saint Quentin Fallavier (FR); Duchand, Sylvain, F-38070 Saint-Quentin-Fallavier (FR); Mosquet, Martin, F-38070 Saint Quentin Fallavier (FR); Zhang, Qing, F-38070 Saint Quentin Fallavier (FR)
(74) Representative: Keschmann, Marc

(57) **Abstract**

A method of building marine concrete elements layer-by-layer, said method comprising:
extruding a flowable construction material through an outlet of a deposition head in order to form a layer of construction material, said construction material comprising a hydraulic cement and a superabsorbent polymer,
wherein successive layers of construction material are placed on top of each other and allowed to cure and harden, in order to obtain the marine concrete element.

## Description

The invention refers to a method of building a concrete element for marine or river applications layer-by-layer, such as 3D concrete or mortar printing, and to its use to foster the development of marine life.

When concrete is used for marine or river applications, it needs to satisfy specific requirements, such as density, durability in aggressive environments, and a high mechanical strength. Conventional concrete mix designs used to fulfill these requirements result in structures that have a dense microstructure, a smooth surface, and a low porosity.

In recent years, new concrete compositions and construction methods have been developed to produce concrete elements that provide an environment that fosters the development of marine life. This new market related to "eco-engineering" aims at developing technical infrastructures that will have a positive impact on the marine or river environment, by promoting biodiversity.

Concrete structures and surfaces generally lack the heterogeneity and surface roughness that is usually present on natural rocky shores, enabling them to support greater numbers of individuals and species. Indeed, fast and durable colonization of marine or river structures by aquatic life requires that the concrete structures have sufficient surface roughness. Of particular importance for the colonization and growth of aquatic life is the presence of open porosity at the surface of the structures.

It has already been suggested to add organic bioactive agents, such as wood, and nutrients to the concrete mixture, in order to enhance the growth of aquatic life. Further, it is known to use marine by-products, in particular marine by-products based on limestone, or aggregates (shells, coral, etc.) as an addition to the concrete mixture or as an application to the surface of the concrete structure.

EP0854240 and EP1707681 disclose concrete structures for marine and river applications, wherein at least one surface of the structure comprises a water permeable textile fabric bonded thereto. The textile fabric is used to increase surface roughness and foster the development of marine life.

WO2018/042240 discloses a concrete element comprising an outer layer of highly porous concrete, the core of the concrete element being a dense concrete of higher strength, providing structural strength to the element.

WO2014/125493 discloses a marine concrete infrastructure suitable for the development of marine life, comprising a specific concrete composition more suitable for the development of marine life. In particular, the concrete is free from specific metals and heavy metals, phosphates and the pH of the concrete is below 12.

Such technical approaches can effectively provide concrete elements that foster the development of marine life. However, because the corresponding manufacturing processes, often done in precast manufacturing plants, it is not possible to easily produce concrete elements that have a more complex geometry. More specifically, it is not possible to provide complex shapes that can for example, mimic the structures of natural reefs. Such structures are of particular importance for the development of marine life as, additionally to the suitable concrete composition, more complex shapes may provide shelter and protection for, for example fish or crustaceans that would colonize the structure.

To solve these limitations, the present invention aims at proposing a method of production of a concrete for marine or river applications by layer-by-layer deposition, such as 3D printing.

3D printing is a building technique that is commonly called "additive manufacturing" and consists of joining material to produce objects, layer upon layer, from 3D model data or other electronic data source. In particular, successive layers of material are formed under computer control by means of an industrial robot. It has already been proposed to develop 3D printers capable of producing structural buildings from a construction material that can be a mortar or a concrete. According to these proposals, the construction material is extruded through a nozzle to build structural components layer-by-layer without the use of formwork or any subsequent vibration. The possibility to build structures without formwork is a major advantage in terms of production rate, freedom to produce complex shapes and cost reduction.

Usually, 3D printing of construction materials is a continuous process that comprises conveying fresh concrete, mortar or micro-mortar to a deposition head and placing the construction material through an outlet of the deposition head in order to form a layer of concrete. While placing the concrete, the mortar or the micro-mortar, the deposition head is moved under computer control in order to create a layer of construction material in accordance with the underlying 3D model. In particular, the deposition head places a ribbon of fresh concrete or mortar material. For allowing the fresh concrete or mortar to be moved smoothly through each part of the delivery process to the deposition head, a consistent rheology of the fresh material must be safeguarded.

However, the construction material must not only be sufficiently fluid for conveying and extrusion purposes, but also sufficiently firm in order to provide the required mechanical stability of the 3D printed structure before the hydraulic binder sets. In particular, the lower layers of the construction material should sustain the load imposed by upper layers without collapsing or deforming.

Another aspect to be considered is the printing speed. A high printing speed is needed for reducing construction time and to ensure an adequate interlayer adhesion. This is in some cases achieved by using a hydraulic binder that has a short initial setting time, as the deposed material will harden quickly and be able to support the layers that are subsequently deposited.

3d printed elements also require a strong bonding strength between the deposited layers, to ensure an adequate overall strength of the 3d printed structure. For this purpose, it is beneficial to place a layer while the preceding layer is still fresh. However, with a hydraulic binder having a short initial setting time the operational flexibility is very limited.

To accommodate some of the above requirements, it has been proposed to add various admixtures to the flowable construction material in the deposition head immediately before the material is placed through an outlet of the deposition head. This allows to separately optimize the material characteristics for the process of pumping the material to the deposition head and for the process of placing the material layer by layer. In particular, the construction material can be designed to have a low plastic viscosity and a low yield stress for a good pumpability, and is adjusted to obtain the material properties that are desired for the placing process by adding a suitable admixture in the deposition head.

For example, WO 2017/221058 discloses adding a viscosity modifying agent to the flowable construction material in the deposition head so as to increase the yield stress. Starch ether, celluloses ether, water soluble polyacrylamide, casein, and/or welan gum have been suggested to be used as the rheology modifying agent.

It is known from prior art that concrete surfaces that have a higher surface roughness and higher porosity are more suitable for the development of marine life. When producing concrete for the development of marine life, one main technical challenge therefore resides in being able to produce such a concrete by layer-by-layer deposition.

The present invention aims at solving this problem by integrating a superabsorbent polymer into the construction material. The use of the superabsorbent polymer has the following advantages for the process of production of the concrete element:
- filling the volume of fresh concrete or mortar by absorbing the excess water content that is needed for obtaining a high porosity, to facilitate its extrusion, prior to its deposition layer-by-layer,
- enabling to increase the yield strength development of 3D printable mortar or concrete after deposition, therefore replacing the use of a viscosity modifying agent as disclosed in WO 2017/221058,

Once the concrete element has developed sufficient mechanical strength and is placed under water, the superabsorbent polymer then naturally degrades, generating surface roughness and open porosity suitable for the development of marine life. This beneficial effect is even more interesting when the concrete element is placed in seawater, as the high levels of salts induce a reduction of volume of the superabsorbent polymer by salting-out effect, revealing an open porosity much faster.

The invention according to a first aspect thereof provides a method of building marine concrete elements layer-by-layer, such as by 3D concrete or mortar printing, said method comprising:
extruding a flowable construction material through an outlet of a deposition head in order to form a layer of construction material, said construction material comprising a hydraulic cement and a superabsorbent polymer,
wherein successive layers of construction material are placed on top of each other and allowed to cure and harden, in order to obtain the marine concrete element.

The superabsorbent polymer is preferentially biobased and biocompatible. It is preferentially selected from the list of cross-linked polyacrylate/polyacrylamide copolymer, cross-linked polyglutamic acid, cross-linked polyacrylamide copolymer, cross-linked ethylene maleic anhydride copolymer, cross-linked carboxymethylcellulose, cross-linked polyvinyl alcohol copolymers, cross-linked polyethylene oxide, and cross-linked modified starch, or mixtures thereof. Biobased superabsorbants, while degrading or swelling/deswelling, are able to provide the first nutrients that support the development of micro algae, which is a first step in the creation of a new ecosystem.

An example of suitable biobased superabsorbent are the AzuraGel products supplied by the company Ecovia Renewables. Florsorb or Floset products supplied by SNF Floerger are suitable alternatives on a functional aspect, but are not biodegradable, therefore less preferable for the present invention.

In order to enhance the porosity of the concrete element, the method preferably further comprises immersing the marine concrete element into water, in particular sea water, and allowing the superabsorbent polymer to shrink and/or degrade, thereby creating pores in the marine concrete element. The shrinking is based on the effect that the absorbance capacity of the superabsorbent polymer is substantially reduced when in contact with a saline solution, namely sea water.

In one embodiment, the superabsorbent polymer may further comprise nitrogen, phosphorous, and/or potassium based compounds, and their combinations, and preferably MAP (mono-ammonium phosphate), TSP (triple superphosphate), and/or ammonium nitrate. These additional components are further beneficial to the development of marine life, by providing a more complete set of nutrients for the development of microalgae.

Preferably, the method of the invention comprises a step of conveying the construction material to the deposition head. The conveying step is preferably performed by pumping the construction material in its fresh or wet state.

The addition of a superabsorbent polymer according to the invention can result in an increase of the yield stress property of the concrete. When the superabsorbent polymer is added immediately before the construction material is deposited, e.g. in the deposition head, an increase of the yield stress is attained when compared to the yield stress during the conveying step. The increase of the yield stress is attained almost instantly after placement, that is to say before the setting has occurred. Therefore, the increase in yield stress that is achieved by the invention is independent from the setting process of the hydraulic binder of the construction material. Thus, the invention generally does without controlling or accelerating the setting process.

In an alternative embodiment, a viscosity modifying agent is present in the construction material, wherein the viscosity modifying agent is preferentially added immediately before the construction material is deposited, e.g. in the deposition head.

As used herein, a viscosity modifying admixture is as defined in European Standard EN-934-2 of August 2012, which is an admixture that limits segregation in fresh concrete or mortar, i.e. the separation of the concrete constituents as a function of their respective densities and weight, by improving cohesion.

The expression "before setting occurs" is understood to refer to the initial setting time as defined in standard EN 196-3.

According to the needle penetration test method disclosed in said standard, the beginning of the setting process ("initial setting") is identified, when the concrete paste - due to its stiffness - exerts a predefined resistance to a test needle that is penetrating into the paste. In particular, the initial setting time is the time period between the time water is added to the cement and the time at which a 1 mm square section needle fails to penetrate the cement paste, placed in the Vicat's mold 5 mm to 7 mm from the bottom of the mold.

Due to the yield strength increasing effect brought about by the viscosity modifying agent, the presence or the addition of a setting accelerator is preferably excluded. A setting accelerator is understood to be an admixture that is added in order to reduce the initial setting time as defined in the European Standard EN-934-2 of August 2012.

The superabsorbent polymer and the optional viscosity modifying agent may be added to the construction material just before reaching the deposition head or in the deposition head.

The construction material may be a mortar, i.e. a mixture of a hydraulic cement, potentially additional mineral components such as ground limestone, water, sand, and chemical admixtures.

The construction material preferably has a pH of less than 12, preferentially less than 11. This pH range is known to be more suitable for the development of marine life, and can be achieved by adding for example aluminate cement, sulphoaluminate cement, blast furnace slag, or mixtures thereof.

Preferably, the hydraulic cement is composed of Portland cement mixed with any mineral addition described in the cement standard EN197-1 of April 2012.

The hydraulic cement used for the preparation of the construction material preferably comprises at least 30 wt.-% of Portland Cement.

The construction material may also be a concrete, i.e. a mixture of a hydraulic cement, potentially additional mineral components such as ground limestone, water, sand, gravel, and chemical admixtures.

In a preferred embodiment, the construction material is a flowable ultrahigh performance concrete, i.e. a mixture of cement, fine limestone material, micro-sand and/or sand, a high-range water reducing admixture, potentially an accelerating admixture, and water, that develops a compressive strength at 28 days of at least 50 MPa.

In an alternative embodiment, the superabsorbent polymer, the optional viscosity modifying agent, and the construction material are mixed with each other before placing the construction material, wherein a static mixer is preferably used for mixing. In this embodiment, the superabsorbent polymer and the optional viscosity modifying agent are continuously added to the flow of conveyed construction material so that a continuous process is achieved. Preferably, not only the addition of the superabsorbent polymer and the optional viscosity modifying agent, but also its mixing with the flow of conveyed construction material is carried out continuously, so that a continuous deposition of the mix of construction material, the superabsorbent polymer, and the optional viscosity modifying agent may be achieved while moving the deposition head in accordance with the underlying 3D data.

The amount of superabsorbent polymer and the optional viscosity modifying agent that is continuously added to the flow of construction material per time unit is preferably controlled in order to adjust a defined ratio of the superabsorbent polymer and the optional viscosity modifying agent and construction material in the final mixture that is placed layer by layer. In particular, the flow rate of the construction material that is conveyed to the deposition head is measured and the flow rate of the superabsorbent polymer and the optional viscosity modifying agent added to the flow of construction material is adjusted to achieve the defined ratio. Alternatively, a fixed flow rate of the construction material conveyed to the deposition head is adjusted and the flow rate of the superabsorbent polymer and the optional viscosity modifying agent added to the flow of construction material is selected so as to achieve the defined ratio.

In another alternative embodiment, the superabsorbent polymer and the optional viscosity modifying agent are dried at a low temperature before being mixed with the dry components of the construction material, so as to obtain a pre-mixed dry composition. The step of drying is to be carried out at a temperature low enough to avoid any degradation of the superabsorbent polymer. Drying the superabsorbent polymer and the optional viscosity modifying agent at a temperature comprised between 60°C and 95°C until the residual humidity content is below 20 wt.-%, expressed as weight percentage of the superabsorbent polymer and the optional viscosity modifying agent, is sufficient to obtain the so-called dry component. Alternatively, the superabsorbent polymer can be freeze dried. In this embodiment, no superabsorbent polymer is further added immediately before the construction material is deposited. However, a viscosity modifying agent may be added immediately before the construction material is deposited.

Preferably, the step of placing the construction material comprises extruding the construction material in a pasty form through a nozzle of the deposition head.

The amount of the superabsorbent polymer present in or added to the flowable construction material depends on the desired final porosity of the concrete element.

According to a preferred embodiment, the superabsorbent polymer is present in or added to the construction material in an amount of 0.25-5.0 wt.-%, defined as a weight percentage of the hydraulic cement.

The amount of viscosity modifying agent present in or added to the construction material is preferably selected such that a layer of placed material has sufficient stability in order not to collapse under its own weight or the weight of subsequent layer(s) placed on top. In this connection, a preferred mode of operation consists in that, after the placement of a first layer of construction material, at least one subsequent layer of construction material is placed onto the first layer, wherein the amount of viscosity modifying agent added to the construction material is selected so as to increase the yield stress so that the first layer does not collapse under the load of said at least one subsequent layer.

In this connection, "not collapsing" means that the height of the layer is not reduced by more than 10%, preferably more than 5%, under the load of the at least one subsequent layer.

Since the inventive method aims at enabling a fast construction progress, the above stability criteria should preferably be fulfilled at a minimum construction speed as defined by a maximum time gap between the placement of two subsequent layers of material. According to a preferred mode of operation, construction material of the first layer is allowed to rest during a time period of not more than 2 minutes, preferably during a time period of 30-60 seconds, before construction material of a subsequent layer is placed onto the said construction material of the first layer.

According to a preferred embodiment of the invention, the yield stress of the freshly placed construction material is 200-2,000 Pa, preferably 400-800 Pa, measured 30-60 seconds after its placement. Therefore, it is preferably proceeded such that the amount of viscosity modifying agent present in or added to the construction material is selected so as to increase the yield stress to 200-2,000 Pa, preferably 400-800 Pa. The yield stress is measured with a scissometer. A scissometer consists of a vane plunged into the material to be tested and to which an increasing torque is applied. When a failure occurs in the material, the vane starts to rotate, generally as the torque reaches its maximum value, which is considered as the characteristic value that is representative of the yield stress of the material. The yield stress measurement is preferably carried out within 30-60 sec after the material has been placed.

The conveying step of the inventive method comprises conveying the construction material in a flowable state to the deposition head. In particular, the conveying of the construction material is performed by pumping. Preferably, the material is conveyed in a wet state and is ready to be placed without the need of adding any additional components with the optional exception of the superabsorbent polymer, if added immediately before depositing the construction material, and the optional viscosity modifying agent.

Preferably the fresh construction material, such as fresh concrete or fresh mortar, is stored in a silo or any other storage container or in a mixer of a ready-mix delivery truck, or in an intermediary mixer, and is conveyed from the storage site directly to the deposition head.

Preferably, the construction material during the conveying step is designed to be pumpable. In particular, the yield stress of the material to be conveyed is between 200 to 400 Pa when measured with a scissometer.

In order to achieve the conveyability or pumpability described above, a water reducer, in particular a plasticizer or a super-plasticizer, preferably a plasticizer based on polyoxy polycarboxylate or phosphonates, is preferably added to the construction material before the conveying step. Preferably, the flowable construction material contains both, a phosphonate-based superplasticizer and a polycarboxylatebased superplasticizer.

A water reducer makes it possible to reduce the amount of mixing water for a given workability by typically 10-15%. By way of example of water reducers, mention may be made of lignosulphonates, hydroxycarboxylic acids, carbohydrates, and other specific organic compounds, for example glycerol, polyvinyl alcohol, sodium alumino-methyl-siliconate and sulfanilic acid as described in the Concrete Admixtures Handbook, Properties Science and Technology, V.S. Ramachandran, Noyes Publications, 1984.

Superplasticizers belong to a new class of water reducers and are capable of reducing water contents of mixing water, for a given workability, by approximately 30% by mass. By way of example of a superplasticizer, the PCP-based superplasticizers may be noted. The term "PCP" or "polyoxy polycarboxylate" is to be understood according to the present invention as a copolymer of acrylic acids or methacrylic acids and their esters of polyoxyethylene (POE).

Good results have been achieved with the following types of superplasticizers: Viscocrete 510-P by Sika (based on polycarboxylate), Optima 100 by Chryso (based on modified phosphonates) and Viscocrete Tempo 533 by Sika (based on polycarboxylate).

Preferably, the construction material comprises 1-10 kg, more preferably 1-5 kg of a water reducer, a plasticiser or a superplasticizer, per m³ of flowable construction material. If more than one type of water reducer, plasticizer or superplasticizer is used, the amount of 1-10 kg, preferably 1-5 kg, refers to the total amount of all such constituents per m³ of flowable construction material.

The flowable construction material contains a hydraulic cement, which is a hydraulic binder comprising at least 50 wt.-% of CaO and SiO₂ that sets due to a chemical hydration reaction between the dry ingredients and water. The hydraulic cement may contain other components in addition to CaO and SiO₂. Various mineral additions, such as, e.g., silica fume, granulated blast-furnace slag (gbfs), fly ash, natural pozzolans, calcined clays, ground limestone or concrete demolition waste, may be added to Portland cement, in order to obtain Portland composite cements. The mineral additions, typically between 10 and 50 wt.-% of the total weight of the hydraulic cement, are in most applications ground granulated blast furnace slag, fly ash, pozzolans, ground limestone or mixtures thereof. The addition of silica fume can be of particular benefit for the production of high strength 3D printed mortar or concrete, i.e. having a compressive strength at 28 days of at least 70 MPa.

Preferably, the hydraulic cement comprises at least 10 wt.-% of a supplementary cementing material, preferably selected from ground granulated blast-furnace slag and concrete demolition waste. When the hydraulic cement comprises at least 10 wt.-% of blast furnace slag, using acidic admixtures, superabsorbents and viscosity modifying agents that have a pH of less than 7 results in the formation of hazardous substances, such as H₂S gas formed from the dissolution of sulfur containing minerals in the binder, such as slag and concrete demolition waste. The superabsorbent polymer and optional viscosity modifying agent added to the construction material preferably have a pH of at least 7, which prevents the formation of hazardous substances when the two components are mixed together.

Suitable cements are the cements described in the European NF EN 197-1 Standard of April 2012 or mixtures thereof, preferably cement of the types CEM I, CEM II, CEM III, CEM IV or CEM V.

The hydraulic cement may also be a fine or an ultrafine cement, i.e. a hydraulic cement that is ground to a higher fineness than standard hydraulic cement. The fineness can for example be higher that 5000 cm²/g and reach values up to 13000 cm²/g or even 15000 cm²/g (expressed as cement Blaine fineness).

According to a preferred embodiment, the hydraulic cement comprises Portland cement, and less than 10 wt.-% of an aluminate cement, a sulphoaluminate cement, silica fume, metakaolin, or mixtures thereof, based on the total amount of hydraulic cement.

Calcium aluminate cements are cements consisting predominantly of hydraulic calcium aluminates. Alternative names are "aluminous cement", "high-alumina cement" and "Ciment fondu" in French. A hydraulic cement having a short initial setting time will increase the risk that material builds up in the deposition head. Further, a short initial setting time may reduce the bonding strength between the layers placed on above the other, because the preceding layer may not be fresh any more when a subsequent layer is placed. Limiting the content of calcium aluminate cement is also preferred in terms of costs, since calcium aluminate cement is relatively expensive.

Further, the flowable construction material may contain a mineral filler, such as limestone. The addition of a fine fraction of a mineral filler can be of particular benefit for the production of high strength 3D printed mortar or concrete. Preferably, the mineral filler, such as limestone, has a particle size of < 50 µm, preferably < 40 µm. More preferably, the mineral filler, such as limestone, comprises a fine fraction having a particle size distribution characterized by a D50 of 3-5 µm and a D90 of 8-12 µm and a coarse fraction having a particle size distribution characterized by a D50 of 10-12 µm and a D90 of 35-40 µm.

Further, the aggregates present in the flowable construction material may comprise a microsand having a particle size of < 1 mm), a second sand having a particle size of < 4 mm) and optionally aggregates ( > 4 mm and < 32 mm).

The flowable construction material may contain metal fibers and/or organic fibers and/or glass fibers. The quantity by volume of fibers is generally from 0.5 to 8% relative to the total volume of the fresh concrete composition. The quantity of metal fibers, expressed in terms of volume of the final hardened concrete is generally less than 3%, for example from 0.5 to 2.5%, preferably approximately 2%. The quantity of organic fibers, expressed on the same basis, is generally from 1 to 8%, preferably from 2 to 5%. The metal fibers are generally chosen from the group including steel fibers, such as high strength steel fibers, amorphous steel fibers or stainless steel fibers. The steel fibers may optionally be coated with a non-ferrous metal such as copper, zinc, nickel (or alloys thereof).

The individual length (1) of the metal fibers is generally at least 2 mm and is preferably 10 to 30 mm. The ratio 1/d (d being the diameter of the fibers) is generally from 10 to 300, preferably from 30 to 300, preferably from 30 to 100.

The organic fibers comprise polyvinyl alcohol (PVA) fibers, polyacrylonitrile (PAN) fibers, fibers of polyethylene (PE), high-density polyethylene (HDPE) fibers, polypropylene (PP) fibers, fibers of homo- or copolymers, polyamide or polyimide fibers. Mixtures of these fibers may be used. The organic reinforcing fibers used in the invention may be classified as follows: high modulus reactive fibers, low modulus nonreactive fibers and low modulus reactive fibers. The presence of organic fibers makes it possible to modify the behavior of the concrete in relation to heat or fire.

The individual length of the organic fibers is preferably from 5 to 40 mm, preferably from 6 to 12 mm. The organic fibers are preferably PVA fibers.

The effective water/cement ratio (wt/wt ratio) of the construction material used in the invention is preferably from 0.4 to 0.6, more preferably from 0.48 to 0.57. The effective water/binder ratio may vary, for example due to the water demand of the mineral additions when these are used. The water/binder ratio is defined as being the ratio by mass of the quantity of water to the dry mass of the hydraulic cement (Portland cement and mineral additions).

In an alternative embodiment, the construction material is deposited directly under water, so as to form an artificial reef.

In a second aspect, the invention relates to a concrete element obtained from the method of preparation herein described, wherein the mineral void content is of at least 5 vol.-%, preferentially 10 vol.-%, expressed as a volume percentage of mineral phases in the concrete element. The mineral void content represents the portion of the total volume of the concrete element that does not contain any mineral material.

The invention will now be explained with reference to the following examples.

In the examples, the following mortar compositions have been used.

### Example 1 : mono-component mortar with a dry superabsorbent polymer.

| | **Mono-component mortar** | |
|---|---|---|
| **Mortar #** | **# 1** | **#2** |
| **Raws materials** | **Kg/m³** | **Kg/m³** |
| Cement CEM I 52.5 R | 300 | 300 |
| Slag | 300 | 300 |
| Sand 0/2mm Sand AF-T-0/2C-PZ Limestone crushed | 1303 | 1214 |
| Superabsorbent Flosorb CE 330 S (SNF) (a polyacrylate/polyacrylamide copolymer) | 3.0 | 4.61 |
| Walocel MKX 6000 PF 01 Methyl Hydroxyethyl cellulose (DOW) | 0.720 | 1.215 |
| Plasticizer Viscocrete 510-P (Sika) | 1.800 | 3.000 |
| W_{eff}/CEM I 52.5R (weight ratio) | 0.9 | 1.0 |
| W_{eff}/dry mix (weight ratio) | 0.141 | 0.164 |

Mortar compositions were prepared by performing the following steps:

| **Steps** | **Details** | **Duration** |
|---|---|---|
| Dry powder mixing | PV (140 ± 5rpm) | |
| Water introduction | PV (140 ± 5rpm) | < 10 seconds |
| Mixing | PV (140 ± 5rpm) | 2 minutes |

### Example 2 : Two-component mortar with dispersion of superabsorbent polymer in calcium chloride solution as thickener.

| | **Bi-component mortar** |
|---|---|
| **Mortar #** | **# 1** |
| **Raws materials** | **Kg/m³** |
| Premix NaG3 3DPG Ductal Lafarge | 2144 |
| Superplastisizer ChrysoFluid Optima 100 (Chryso) | 8,04 |
| W_{eff}/dry mix | 0,100 |
| I-Dacreto LH1 (a CaCl₂ saturated solution with 30% effective polyacrylate/polyacrylamide copolymer) (second component) | 30 |

Mortar composition was prepared by performing the following steps:

| **Steps** | **Details** | **Duration** |
|---|---|---|
| Water introduction | PV (140 ± 5rpm) | < 30 seconds |
| Mixing | PV (140 ± 5rpm) | 2 minutes |
| Mixing | GV (140 ± 5rpm) | 3 minutes |
| Mixing with Superabsorbent | PV (140 ± 5rpm) | 30 seconds |
| dispersion | | |

### Exeaple 3 : Two-component mortar with a dry superabsorbent polymer and a viscosity modifying agent.

| | **Two-component mortar** |
|---|---|
| **Mortar #** | **# 1** |
| **Raws materials** | **Kg/m³** |
| Premix NaG3 3DPG Ductal Lafarge | 2049.5 |
| Superabsorbent Flosorb CE 330 S | 3,41 |
| Superplastisizer Viscorete 510-P (Sika) | 4,10 |
| Chrysofluid Optima 100 (Chryso) | 6,44 |
| W_{eff}/dry mix | 0.122 |

| **Steps** | **Details** | **Duration** |
|---|---|---|
| Water introduction | PV (140 ± 5rpm) | < 30 seconds |
| Mixing | PV (140 ± 5rpm) | 2 minutes |
| Mixing | GV (140 ± 5rpm) | 3 minutes |
| Thickener addition | | < 10 seconds |
| Mixing | PV (140 ± 5rpm) | 30 seconds |

The mortars were prepared as described above, extruded and deposited so as to form a concrete element. The concrete element was cured for 28 days at 20°C in the laboratory before being immersed in artificial seawater ASTM D1141-98. Visual close inspection of the surface of the hardened concrete confirmed that the presence of the porosity desired for fostering the development of marine life.

## Claims

1. A method of building marine concrete elements layer-by-layer, such as by 3D concrete or mortar printing, said method comprising:
extruding a flowable construction material through an outlet of a deposition head in order to form a layer of construction material, said construction material comprising a hydraulic cement and a superabsorbent polymer,
wherein successive layers of construction material are placed on top of each other and allowed to cure and harden, in order to obtain the marine concrete element.

2. Method according to claim 1, wherein the superabsorbent polymer is present in the construction material at a concentration of 0.25-0.5 wt.-%, expressed as a weight percentage of the hydraulic cement.

3. Method according to claim 1 or 2, wherein the superabsorbent polymer is added to the construction material before or during placing the construction material.

4. Method according to claim 1, 2 or 3, further comprising immersing the marine concrete element into water, in particular sea water, and allowing the superabsorbent polymer to shrink and/or degrade, thereby creating pores in the marine concrete element.

5. Method according to any one of claims 1 to 4, wherein the superabsorbent polymer is a cross-linked polymer.

6. Method according to claim 5, wherein the superabsorbent polymer is selected from the list of cross-linked polyacrylate/polyacrylamide copolymer, cross-linked polyglutamic acid, cross-linked polyacrylamide copolymer, cross-linked ethylene maleic anhydride copolymer, cross-linked carboxymethylcellulose, cross-linked polyvinyl alcohol copolymers, cross-linked polyethylene oxide, and cross-linked modified starch, or mixtures thereof.

7. Method according to any one of claims 1 to 6, wherein the superabsorbent polymer comprises nitrogen, phosphorous, and/or potassium based compounds and their combinations, preferably MAP (mono-ammonium phosphate), TSP (triple superphosphate), and/or ammonium nitrate.

8. Method according to any one of claims 1 to 7, wherein the construction material further comprises a viscosity modifying agent.

9. Method according to any one of claims 1 to 8, wherein the construction material has a pH of less than 12, preferentially less than 11.

10. Method according to any one of claims 1 to 9, wherein the hydraulic cement comprises at least 30 wt.-% of Portland cement, expressed as a weight percentage of the amount of hydraulic cement.

11. Method according to any one of claims 1 to 10, wherein the hydraulic cement comprises less than 10 wt.-% of aluminate cement, sulphoaluminate cement, silica fume, metakaolin, or mixtures thereof, expressed as a weight percentage of the amount of hydraulic cement.

12. Method according to any one of claims 1 to 11, wherein the superabsorbent polymer, before being added to the construction material, is dried at a temperature comprised between 60°C and 95°C so as to reach a humidity content of less than 20 wt.-%, expressed as a weight percentage of the superabsorbent polymer.

13. Method according to any one of claims 1 to 12, wherein the superabsorbent polymer and optionally the viscosity modifying agent are present in an amount so as to increase the yield stress so that the first layer deposited does not collapse under the load of said at least one subsequent layer.

14. Method according to any one of claim 1 to 13, wherein the superabsorbent polymer and optionally the viscosity modifying agent are added to the construction material in the deposition head, immediately before the construction material is placed.

15. Method according to claim 14, wherein the yield stress of the freshly placed construction material is 200-2,000 Pa, preferably 400-800 Pa, measured 30-60 seconds after its placement.

16. Method according to any one of claims 1 to 15, wherein construction material of the first layer is allowed to rest during a time period of not more than 2 minutes, preferably during a time period of 30-60 sec, before construction material of a subsequent layer is placed onto the said construction material of the first layer.

17. Method according to any one of claims 1 to 16, wherein the construction material is concrete or a cement mortar.

18. Method according to any one of claims 1 to 17, wherein the hydraulic cement comprises at least 10 wt.-% of a supplementary cementing material, being one or several of any secondary constituent described in the cement standard EN 197-1 of April 2012, or concrete demolition waste.

19. Method according to any one of claims 1 to 18, wherein a water reducer, in particular a plasticizer or a super-plasticizer, preferably a plasticizer based on polyoxy polycarboxylate or phosphonates, is added to the construction material before the conveying step of conveying the construction material to the deposition head, wherein the conveying of the construction material is performed by pumping.

20. Method according to any one of claim 1 to 19, wherein the extrusion and placement of the construction material is carried out in situ, under water.

21. Concrete element obtained from a method according to any one of claims 1 to 20, wherein the mineral void content is of at least 5 vol.-%, preferentially 10 vol.-%, expressed as a volume percentage of mineral phases in the concrete element.

22. Use of a concrete structure according to claim 21 for marine applications in contact with water, preferentially seawater, to foster the development of marine life.
